# EUROPÄISCHE PATENTSCHRIFT

(11) **EP 0 974 010 B1**
(45) Veröffentlichungstag und Bekanntmachung des Hinweises auf die Patenterteilung: **12.12.2001**
(21) Anmeldenummer: 98919228.1
(22) Anmeldetag: 07.04.1998
(51) Int. Cl.: F04F 5/20, B60T 17/02

(54) **SAUGSTRAHLPUMPE**
SUCTION JET PUMP
POMPE A JET ASPIRANT

(30) Priorität: 10.04.1997 DE 19714858
(43) Veröffentlichungstag der Anmeldung: 26.01.2000
(73) Patentinhaber: A. Kayser Automotive Systems GmbH, 37574 Einbeck (DE)
(72) Erfinder: SCHULTE, Franz, D-59557 Lippstadt (DE)
(74) Vertreter: Müller-Boré & Partner Patentanwälte
(86) Internationale Anmeldenummer: EP9802009
(87) Internationale Veröffentlichungsnummer: WO9845602

(56) Entgegenhaltungen:
- DE-A- 4 310 761
- DE-A- 19 512 700
- DE-C- 392 385
- US-A- 4 380 418
- US-A- 4 664 603

## Beschreibung

Die Erfindung betrifft eine Saugstrahlpumpe mit einem rohrförmigen Gehäuse, wie sie in Anspruch 1 beschrieben ist.

Saugstrahlpumpen der vorstehend genannten Art werden bei Bremskraftverstärkersystemen mit einem Unterdruck-Bremskraftverstärker eingesetzt. Dabei dient die Saugstrahlpumpe zur Erhöhung des Unterdrucks in dem mit einem Unterdruckerzeuger verbundenem Bremskraftverstärker.

Bei bekannten Anlagen dieser Art wird die Saugstrahlpumpe in eine vom Bremskraftverstärker zu einem Unterdruckerzeuger führende Saugleitung eingesetzt, um bei Bedarf die Saugleitung des Unterdruckerzeugers zu verstärken. Hierzu ist der Unterdruckerzeuger ausgangseitig mit einem seitlich der Strömungsdurchflußrichtung an dem Gehäuse der Saugstrahlpumpe angeordnetem Luftzufuhrstutzen verbunden. Durch die Zuführung der unter Druck stehenden Ausgangsluft des Druckerzeugers in der Saugstrahlpumpe wird in dieser die Strömung beschleunigt und ein zusätzlicher Unterdruck erzeugt. Um einen Druckausgleich zwischen dem Unterdruckerzeuger und dem Volumen des Bremskraftverstärkers zu verhindern, ist in dem Gehäuse der Saugstrahlpumpe zwischen dem Bremskraftverstärker und der Saugstrahlpumpe ein Rückschlagventil vorgesehen.

Eine derartig ausgestaltete Saugstrahlpumpe ist aus der DE 43 10 761 C2 bekannt. Die Wirkung dieser bekannten Saugstrahlpumpe ist nicht zu bemängeln, jedoch ist das Gehäuse schwierig in seiner Herstellung, da dieses durch einstückig angeformte Zwischenwandungen beide Strömungskanäle bildet und der konische Verlauf des ersten Strömungskanals dann spritzgußtechnisch noch eine erhöhte Schwierigkeit darstellt, wenn die einzelnen Wandungen in etwa gleich dick sein sollen. Außerdem ist bei dieser Ausführungsform der Saugstrahlpumpe von Nachteil, daß die gesamte Saugstrahlpumpe abgeändert werden muß, wenn ihre Saugleistung variiert werden soll.

Insbesondere zur Vermeidung des letztgenannten Nachteils wird in der DE 19 512 700 A1 vorgeschlagen, in den ersten Strömungskanal einen separaten Düseneinsatz einzubringen, der die Querschnittsverengung aufweist. Bei dieser Ausführungsform ist es trotzdem noch erforderlich, daß das Innere des Gehäuses in zwei Strömungskanäle durch Anordnung von Innenwandungen aufgeteilt ist. In einen dieser beiden Strömungskanäle ist der separat ausgeführte Düseneinsatz fest und außen dichtabschließend eingesetzt. Diese Ausführungsform der Saugstrahldüse führt nicht zu einer vereinfachten Herstellung des Gehäuses und hat darüberhinaus noch den Nachteil, daß für die Querschnittsverengung des ersten Strömungskanals ein zusätzliches Bauteil herzustellen und in das Gehäuse einzubringen ist.

Aufgabe der Erfindung ist es, den Aufbau, die Anwendung und die Herstellung einer Saugstrahlpumpe wesentlich zu vereinfachen.

Diese Aufgabe wird durch eine Saugstrahlpumpe mit den in Anspruch 1 angegebenen Merkmalen gelöst.

Vorteilhafte Ausführungsformen ergeben sich aus den Unteransprüchen.

Eine erfindungsgemäße Saugstrahlpumpe weist ein rohrförmiges Gehäuse auf, wobei das Gehäuse an einem Ende einen ersten Luftzufuhr- und an einem anderen Ende einen Luftabfuhrstutzen und seitlich abstrebend einen zweiten Luftzufuhrstutzen aufweist, wobei in dem Gehäuse zwei Strömungskanäle ausgebildet sind, wobei der erste Strömungskanal die Strahlpumpe ist und der zweite Strömungskanal ein Bypass ist und wobei zumindest der zweite Strömungskanal durch wenigstens ein Rückschlagventil verschlossen ist und an dem den ersten Luftzufuhrstutzen aufweisenden Ende des Gehäuses ein Luftverzweigungsstück eingesetzt ist, das den ersten Lufteinlaßstutzen mit beiden Strömungskanälen verbindet, wobei in das Luftverzweigungsstück das Rückschlagventil für den Bypass eingesetzt ist, wobei der erste Strömungskanal einen Abschnitt mit verringertem Querschnitt aufweist und in den Abschnitt mit dem verringerten Querschnitt ein Saugrohreinsatz hineinragt, wobei an das Luftverzweigungsstück ein den ersten Strömungskanal bildendes Rohr angeformt ist, wobei das Rohr durch eine seitliche Öffnung mit dem zweiten Luftzufuhrstutzen in einer Luftströmungsverbindung steht und in das Rohr von der Seite des Luftverzweigungsstückes her der Saugrohreinsatz eingeschoben ist. Hierdurch ergeben sich wesentliche Vorteile für die spritzgußtechnische Herstellung. Weiterhin ist das Gehäuse der Saugstrahlpumpe unabhängig von der Wahl der gewünschten Saugleistung und darüberhinaus ist die Anzahl der Einzelteile und damit der Zusammenbau der Saugstrahlpumpe gemäß der Erfindung vereinfacht.

Bei einer vorteilhaften Ausgestaltung der Erfindung liegt das den ersten Strömungskanal bildende Rohr mit dem die seitliche Öffnung aufweisenden Bereich luftabschließend auf den benachbarten Bereich der Innenwandung des Gehäuses auf. Dadurch wird auf einfache und wirksame Weise bewirkt, daß der erste Strömungskanal mit dem zweiten Luftzufuhrstutzen nach luftdicht verbunden ist.

Bei einer weiteren vorteilhaften Ausgestaltung der Erfindung verringert sich zunächst ein Abschnitt des den ersten Strömungskanal bildenden Rohres - in Strömungsrichtung gesehen - in der lichten Weite und erweitert sich nachfolgend. Eine solche Venturirohranordnung des ersten Strömungskanals ermöglicht die einfache Bereitstellung eines großen Unterdrucks am ersten Luftzufuhrstutzen. Verursacht wird der Unterdruck durch die Beschleunigung der Luftströmung in dem den Venturirohrbereich bildenden Abschnitt des ersten Strömungskanals.

Bei einer weiteren vorteilhaften Ausgestaltung der Erfindung besteht der Saugrohreinsatz aus einem Außenrohr und in einem - in Strömungsrichtung gesehen - aus dem Außenrohr herausragenden Innenrohr, wobei das Außenrohr mit einem an seinem vorderen Ende angebrachten Außenflansch dicht und mit seinem hinteren Ende Luftströmungsverbindungen aufweisend in das den ersten Strömungskanal bildende Rohr eingesetzt ist. Diese Ausführung gestattet eine einfache Ausgestaltung, eine leichtes Einbauen und einen sicheren Sitz des Saugrohreinsatzes.

Bei einer weiteren vorteilhaften Ausgestaltung der Erfindung weist das Luftverzweigungsstück im Bereich des zweiten Strömungskanals eine vom äußeren Rand des vorderen Endes des Gehäuses bis zu dem den ersten Strömungskanal bildenden Rohr schrägverlaufende Planfläche auf, die den Ventilsitz für das den zweiten Strömungskanal verschließende Rückschlagventil bildet. Dies ermöglicht, bei einfacher Herstellung und Aufbau, den Ventilsitz des verschließenden Rückschlagventils für die Funktionsweise vorteilhaft anzuordnen.

Bei einer weiteren vorteilhaften Ausgestaltung der Erfindung ist der erste Luftzufuhrstutzen an einen das vordere Ende des Gehäuses abschließenden Deckel angeformt. Diese Ausgestaltung des ersten Luftzufuhrstutzens weist vorteilhafte Eigenschaften für die spritzgußtechnische Herstellung auf.

Bei einer weiteren vorteilhaften Ausgestaltung der Erfindung ist der erste Luftzufuhrstutzen mit einem Rückschlagventil verschlossen. Dieses zweite Rückschlagventil verhindert, daß durch Druckumkehr Luft durch den ersten Luftzufuhrstutzen aus der Saugstrahlpumpe austritt. Vorteilhafterweise ist dieses Rückschlagventil unmittelbar von innen her auf den ersten Luftzufuhrstutzen aufgesetzt, so daß die beiden Rückschlagventile hintereinander geschaltet sind und somit ein Zurückströmen von Luft durch den Bypass in die Unterdruckkammer in doppelter Weise verhindert wird und daß im Normalbetrieb, in dem der größte Teil der Strömung durch den Bypass fließt, die Hintereinanderschaltung der beiden Rückschlagventile den Strömungswiderstand erhöht.

Bei einer weiteren vorteilhaften Ausgestaltung der Erfindung sind der Deckel und das Gehäuse reibverschweißt ausgebildet. Hierdurch wird bei einer einfachen Anordnung eine luftdichte Verbindung zwischen dem Deckel und dem Gehäuse bereitgestellt, wodurch sich vorteilhafte Eigenschaften in der Herstellung und Funktionsweise der Saugstrahlpumpe ergeben.

Anhand eines vorteilhaften Ausführungsbeispiels wird die Erfindung näher beschrieben. Es zeigen:

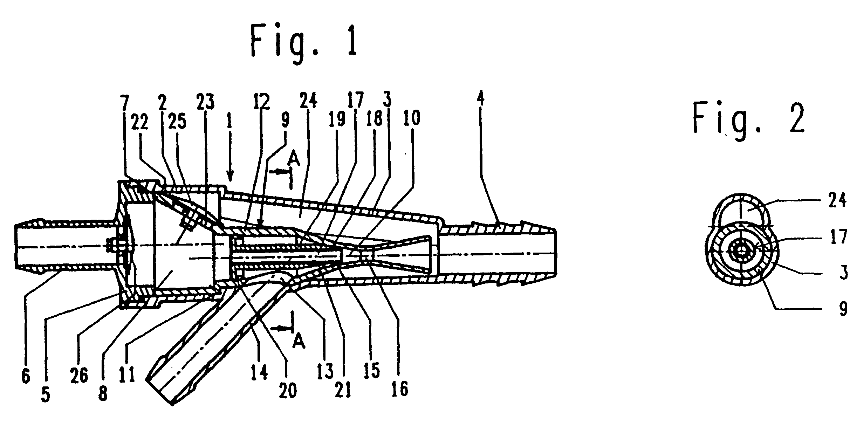

- Figur 1: einen mittleren Längsschnitt durch die Saugstrahlpumpe und
- Figur 2: einen Schnitt entlang der Linie A-A.

Das Gehäuse 1 ist im wesentlichen rohrförmig ausgestaltet, wobei der vordere Abschnitt 2 im Querschnitt kreisförmig, der sich daran anschließende Abschnitt 3 im Querschnitt im wesentlichen oval ist und sich nach hintenhin verjüngt. An diesen sich verjüngenden Abschnitt 3 schließt sich der Luftabfuhrstutzen 4 an. Der vordere, im Querschnitt kreisrunde Abschnitt 2 des Gehäuses 1 ist durch einen Deckel 5 luftdicht verschlossen. An diesen Deckel 5 ist sich in Längsrichtung des Gehäuses 1 wegerstreckend der erste Luftzufuhrstutzen 6 angeformt.

Von dem vorderen, im Querschnitt kreisrunden Abschnitt 2 des Gehäuses 1 her ist ein langgestrecktes, eine axiale Durchgangsöffnung aufweisendes, einstückiges Einsatzteil eingebracht, das mit seinem hinteren Abschnitt das Luftverzweigungsstück 8 bildet, an welchem sich ein Rohr 9 anschließt, welches den ersten Strömungskanal 10 bildet. Das Luftverzweigungsstück 8 liegt mit seinem Außenmantel dicht an dem Innenmantel des im Querschnitt kreisrunden vorderen Abschnitts 2 des Gehäuses 1 an und ist zwischen einer Innenschulter 11 des Gehäuses 1 und dem Deckel 5 fest eingespannt. Hierbei kann eine zusätzliche Dichtung, beispielsweise durch eine O-Ring-Quetschdichtung, vorgesehen sein, um eine luftdichte Verbindung des Außenmantels des Luftverzweigungsstücks 8 zum vorderen Abschnitt 2 des Gehäuses 1 bereitzustellen. Vorzugsweise können auch das Luftverzweigungsstück 8, der erste Luftzufuhrstutzen 6, der Deckel 5 und das anschließende Rohr 9 einstückig bzw. integral ausgebildet sein.

Das sich an das Luftverzweigungsstück 8 anschließende Rohr 9 verläuft zunächst zylindrisch und weist in diesem zylindrischen Abschnitt 12 eine seitliche Öffnung 13 auf, die exakt über und auf dem zweiten Luftzufuhrstutzen 14 liegt. Der sich an den zylindrischen Abschnitt 12 anschließende Abschnitt 15 des Rohrs 9 verläuft zunächst sich im Querschnitt verjüngend bis zu einer Engstelle 16 und erweitert sich dann trichterförmig.

Von dem Luftverzweigungsstück 8 her ist in das Rohr 9 ein Saugrohreinsatz geschoben, der aus einem Innenrohr 18 und einem Außenrohr 19 zusammengesetzt ist. Das Innenrohr 18 ragt auf der stromabwärts gelegenen Seite aus dem Außenrohr 19 heraus und ragt bis in den sich verengenden Abschnitt des Rohrs 10 hinein. Das Außenrohr 19 weist an seinem hinteren Ende einen Außenflansch 20 auf, mit dem es dichtend in das Rohr 9 eingesetzt ist. Das dem Flansch gegenüberliegende Ende des Außenrohrs 19 stützt sich an dem sich verengenden Abschnitt des Rohrs 9 ab, jedoch nicht dichtend, sondern unter Freilassung von Luftströmungsverbindungen 21.

Das Luftverzweigungsstück 8 weist eine schrägverlaufende Planfläche 22 auf, in die zur Luftströmungsverbindung zwischen dem Luftverzweigungsstück 8 und dem als Bypass wirkenden zweiten Strömungskanal 24 Öffnungen 23 eingebracht sind. Dieser zweite Luftströmungskanal 24 wird dadurch gebildet, daß das Rohr 9 eine wesentlich kleinere Querschnittsfläche aufweist als die Innenquerschnittsfläche auf dem Abschnitt 3 des Gehäuses 1.

Die Öffnungen 23 im Luftverzweigungsstück 8 sind mit einem pilzförmigen elastischen Teil verschlossen, welches ein den zweiten Strömungskanal 24 verschließendes Rückschlagventil 25 bildet und welches verhindert, daß Luft durch den zweiten Strömungskanal 24 in das Luftverzweigungsstück 8 strömen kann. Weiterhin ist der Luftzufuhrstutzen 6 durch ein weiteres, gleichartig ausgebildetes Rückschlagventil 26 verschlossen, welches zusätzlich verhindert, daß Luft durch den zweiten Strömungskanal 24 in den ersten Luftzufuhrstutzen 6 einströmt. Dieses Rückschlagventil 26 verhindert jedoch auch gleichzeitig, daß Luft durch den ersten Strömungskanal 10 in den ersten Luftzufuhrstutzen 6 eintreten kann.

### Bezugszeichenliste

- 1: Gehäuse
- 2: vorderer Abschnitt
- 3: Abschnitt
- 4: Luftabfuhrstutzen
- 5: Deckel
- 6: erster Luftzufuhrstutzen
- 7: Endrand
- 8: Luftverzweigungsstück
- 9: Rohr
- 10: erster Strömungskanal
- 11: Innenschulter
- 12: zylindrischer Abschnitt
- 13: seitliche Öffnung
- 14: zweiter Luftzufuhrstutzen
- 15: anschließender Abschnitt
- 16: Engstelle
- 17: Saugrohreinsatz
- 18: Innenrohr
- 19: Außenrohr
- 20: Außenflansch
- 21: Luftströmungsverbindungen
- 22: Planfläche
- 23: Öffnungen
- 24: zweiter Strömungskanal
- 25: Rückschlagventil
- 26: Rückschlagventil

## Patentansprüche

1. Saugstrahlpumpe mit einem rohrförmigen Gehäuse (1), wobei
das Gehäuse (1) an einem Ende einen ersten Luftzufuhr- (6) und an einem anderen Ende einen Luftabfuhrstutzen (4) und seitlich abstrebend einen zweiten Luftzufuhrstutzen (14) aufweist,
in dem Gehäuse (1) zwei Strömungskanäle (10,24) ausgebildet sind,
der erste Strömungskanal (10) die Strahlpumpe ist,
der zweite Strömungskanal (24) ein Bypass ist,
zumindest der zweite Strömungskanal (24) durch wenigstens ein Rückschlagventil (25) verschlossen ist,
an dem den ersten Luftzufuhrstutzen aufweisenden Ende des Gehäuses (1) ein Luftverzweigungsstück (8) eingesetzt ist, das den ersten Lufteinlaßstutzen (6) mit beiden Strömungskanälen (10,24) verbindet,
in das Luftverzweigungsstück (8) das Rückschlagventil (25) für den Bypass eingesetzt ist,
der erste Strömungskanal (10) einen Abschnitt mit verringertem Querschnitt (15,16) aufweist,
in den Abschnitt mit dem verringerten Querschnitt (15,16) ein Saugrohreinsatz (17) hineinragt,
wobei an das Luftverzweigungsstück (8) ein den ersten Strömungskanal (10) bildendes Rohr (9) angeformt ist,
das Rohr (9) durch eine seitliche Öffnung (13) mit dem zweiten Luftzufuhrstutzen (14) in einer Luftströmungsverbindung steht und
in das Rohr (9) von der Seite des Luftverzweigungsstückes (8) her der Saugrohreinsatz (17) eingeschoben ist.

2. Saugstrahlpumpe nach Anspruch 1, wobei das den ersten Strömungskanal (10) bildende Rohr (9) mit dem die seitliche Öffnung (13) aufweisenden Bereich luftabschließend an dem benachbarten Bereich der Innenwandung des Gehäuses (1) anliegt.

3. Saugstrahlpumpe nach einem oder mehreren der vorherigen Ansprüche, wobei der Abschnitt (15) des den ersten Strömungskanal (10) bildendes Rohres (9) - in Strömungsrichtung gesehen - sich in der lichten Weite zunächst verringert und dann erweitert.

4. Saugstrahlpumpe nach einem oder mehreren der vorherigen Ansprüche, wobei der Saugrohreinsatz (17) aus einem Außenrohr (19) und einem - in Strömungsrichtung gesehen - aus dem Außenrohr (19) herausragenden Innenrohr (18) besteht, wobei das Außenrohr (19) mit einem an seinem vorderen Ende angebrachten Außenflansch (20) dicht und mit seinem hinteren Ende Luftströmungsverbindungen (21) aufweisend in das den ersten Strömungskanal (10) bildende Rohr (9) eingesetzt ist.

5. Saugstrahlpumpe nach einem oder mehreren der vorherigen Ansprüche, wobei das Luftverzweigungsstück (8) im Bereich des zweiten Strömungskanals (24) eine vom äußeren Rand des vorderen Endes des Gehäuses (1) bis zu dem den ersten Strömungskanal (10) bildenden Rohr (9) schrägverlaufende Planfläche (22) aufweist, die den Ventilsitz für das den zweiten Strömungskanal (24) verschließende Rückschlagventil (25) bildet.

6. Saugstrahlpumpe nach einem oder mehreren der vorherigen Ansprüche, wobei der erste Luftzufuhrstutzen (6) an einen das vordere Ende des Gehäuses (1) abschließenden Deckel (5) angeformt ist.

7. Saugstrahlpumpe nach Anspruch 6, wobei der erste Luftzufuhrstutzen (6) mit einem Rückschlagventil (26) verschlossen ist.

8. Saugstrahlpumpe nach einem oder mehreren der vorherigen Ansprüche, wobei der Deckel (5) und das Gehäuse (1) reibverschweißt sind.

## Claims

1. Suction jet pump with a tubular casing (1), the casing (1) having, at one end, a first air supply nipple (6) and, at another end, an air discharge nipple (4) and, projecting laterally, a second air supply nipple (14), two flow ducts (10, 24) being formed in the casing (1), the first flow duct (10) being the jet pump, the second flow duct (24) being a bypass, at least the second flow duct (24) being closed by means of at least one non-return valve (25), there being inserted, at that end of the casing (1) which has the first air supply nipple, an air branching piece (8) which connects the first air inlet nipple (6) to both flow ducts (10, 24), the non-return valve (25) for the bypass being inserted into the air branching piece (8), the first flow duct (10) having a portion with reduced cross section (15, 16), a suction-tube insert (17) projecting into the portion with the reduced cross section (15, 16), a tube (9) which forms the first flow duct (10) being integrally formed on the air branching piece (8), the tube (9) being in air-flow connection with the second air supply nipple (14) by means of a lateral orifice (13), and the suction-tube insert (17) being pushed into the tube (9) from the side of the air branching piece (8).

2. Suction jet pump according to Claim 1, the tube (9) which forms the first flow duct (10) coming to bear, with the region having the lateral orifice (13), against the adjacent region of the inner wall of the casing (1) in an airtight manner.

3. Suction jet pump according to one or more of the preceding claims, the portion (15) of the tube (9) which forms the first flow duct (10) first decreasing in its clear width and then widening, as seen in the direction of flow.

4. Suction jet pump according to one or more of the preceding claims, the suction-tube insert (17) consisting of an outer tube (19) and of an inner tube (18) projecting out of the outer tube (19), as seen in the direction of flow, the outer tube (9) being inserted, with an outer flange (20) attached to its front end, sealingly and, with its rear end, so as to have air flow connections (21) into the tube (9) forming the first, flow duct (10).

5. Suction jet pump according to one or more of the preceding claims, the air branching piece (8) having, in the region of the second flow duct (24), a plane surface (22) which runs obliquely from the outer edge of the front end of the casing (1) as far as the tube (9) forming the first flow duct (10), which forms the valve seat for the non-return valve (25) closing the second flow duct (24).

6. Suction jet pump according to one or more of the preceding claims, the first air supply nipple (6) being integrally formed on a cover (5) closing off the front end of the casing (1).

7. Suction jet pump according to Claim 6, the first air supply nipple (6) being closed by means of a non-return valve (26).

8. Suction jet pump according to one or more of the preceding claims, the cover (5) and the casing (1) being friction-welded.

## Revendications

1. Pompe à jet aspirant comportant un corps tubulaire (1), le corps (1) comportant, à l'une de ses extrémités, une première tubulure (6) d'injection d'air et à l'autre extrémité une tubulure (4) d'échappement d'air, et s'en écartant latéralement une deuxième tubulure (14) d'injection d'air,
deux canaux d'écoulement (10, 24) étant aménagés dans le corps (1),
le premier canal d'écoulement (10) constituant la pompe à jet,
le second canal d'écoulement (24) étant un canal de dérivation,
au moins le second canal d'écoulement (24) étant obturé par au moins un clapet de non-retour (25),
un élément (8) d'embranchement d'air étant inséré dans l'extrémité du corps (1) qui comporte la première tubulure d'injection d'air et reliant la première tubulure d'injection d'air (6) aux deux canaux d'écoulement (10, 24),
le clapet de non-retour (25) du canal de dérivation étant monté dans l'élément (8) d'embranchement d'air,
le premier canal d'écoulement (10) comportant un tronçon présentant une section transversale réduite (15, 16),
un insert de tube d'aspiration (17) faisant saillie dans le tronçon présentant la section transversale réduite (15, 16),
un tube (9) formant le premier canal d'écoulement (10) étant conformé sur l'élément (8) d'embranchement d'air,
le tube (9) étant en une liaison d'écoulement d'air avec la seconde tubulure (14) d'injection d'air via une ouverture latérale (13), et
l'insert de tube d'aspiration (17) pénétrant dans le tube (9) en partant du côté de l'élément (8) d'embranchement d'air.

2. Pompe à jet aspirant selon la revendication 1, où le tube (9) formant le premier canal d'écoulement (10) porte, avec la zone présentant l'ouverture latérale (13), hermétiquement contre la zone adjacente de la paroi intérieure du corps (1).

3. Pompe à jet aspirant selon l'une ou plusieurs des revendications précédentes, où le diamètre intérieur du tronçon (15) du tube (9) formant le premier canal d'écoulement (10) - vu dans le sens de l'écoulement - se resserre d'abord pour s'élargir ensuite.

4. Pompe à jet aspirant selon l'une ou plusieurs des revendications précédentes, où l'insert (17) de tube d'aspiration se compose d'un tube extérieur (19) et d'un tube intérieur (18) faisant saillie hors du tube extérieur (19) - dans le sens de l'écoulement -, le tube extérieur (19) étant monté dans le tube (9) formant le premier canal d'écoulement (10), de manière étanche avec une collerette extérieure (20) aménagée à son extrémité avant, et par son extrémité arrière qui comporte des orifices d'écoulement d'air (21).

5. Pompe à jet aspirant selon l'une ou plusieurs des revendications précédentes, où l'élément (8) d'embranchement d'air comporte, dans la zone du second canal d'écoulement (24), une surface plane (22) s'étendant obliquement depuis le bord extérieur de l'extrémité avant du corps (1) jusqu'au tube (9) formant le premier canal d'écoulement (10), cette surface plane formant le siège de clapet pour le clapet de non-retour (25) obturant le second canal d'écoulement (24).

6. Pompe à jet aspirant selon l'une ou plusieurs des revendications précédentes, où la première tubulure (6) d'injection d'air est conformée sur un couvercle (5) obturant l'extrémité antérieure du corps (1).

7. Pompe à jet aspirant selon la revendication 6, où la première tubulure (6) d'injection d'air est obturée par un clapet de non-retour (26).

8. Pompe à jet aspirant selon l'une ou plusieurs des revendications précédentes, où le couvercle (5) et le corps (1) sont soudés l'un sur l'autre par friction.
